# FASCICULE DE BREVET EUROPEEN

(11) **EP 3 911 841 B1**
(45) Date de publication et mention de la délivrance du brevet: **01.03.2023**
(21) Numéro de dépôt: 20705398.4
(22) Date de dépôt: 03.01.2020
(51) Int. Cl.: F01D 5/28, B64C 11/26, D03D 11/00, D03D 25/00, F04D 29/38

(54) **AUBE OU PALE D'HELICE COMPOSITE POUR AERONEF AVEC TISSAGE PARTICULIER D'UNE PRÉFORME FIBREUSE RECEVANT UNE VESSIE REMPLIE D'UNE MOUSSE DE CONFORMATION**
VERBUNDWERKSTOFFSCHAUFEL EINES LUFTFAHRZEUGS MIT BESONDERS GEWOBENER FASERVORFORM, DIE EINE MIT STRUKTURELLEN SCHAUM GEFÜLLTE BLASE AUFNIMMT
AIRCRAFT COMPOSITE BLADE WITH PARTICULAR WEAVING OF A FIBER PREFORM RECEIVING A POCKET FILLED WITH A STRUCTURAL FOAM

(30) Priorité: 15.01.2019 FR 1900349
(43) Date de publication de la demande: 24.11.2021
(73) Titulaire: SAFRAN AIRCRAFT ENGINES, 75015 Paris (FR)
(72) Inventeur: COURTIER, Vivien, Mickaël, 77550 MOISSY-CRAMAYEL (FR); MAYHEW, Dominique, Gerhardt, 77550 MOISSY-CRAMAYEL (FR); LAURENCEAU, Adrien, Louis, Nicolas, 77550 MOISSY-CRAMAYEL (FR)
(74) Mandataire: Cabinet Beau de Loménie
(86) Numéro de dépôt international: PCT/FR2020/050004
(87) Numéro de publication internationale: WO 2020/148490

(56) Documents cités:
- EP-A1- 3 019 398
- EP-A2- 1 669 547
- US-A1- 2013 017 093
- US-B2- 9 664 053

## Description

### Domaine Technique

La présente invention se rapporte au domaine des aubes ou pales d'hélice pour aéronefs telles que celles présentes sur les turbopropulseurs.

### Technique antérieure

Les aubes ou pales d'hélice pour turbopropulseurs sont généralement réalisées en matériau métallique. Si les aubes ou pales d'hélice en matériau métallique ont une bonne résistance mécanique, elles présentent toutefois l'inconvénient d'avoir une masse relativement importante.

Afin d'obtenir des aubes ou pales d'hélice plus légères, il est connu de réaliser des pales d'hélice en matériau composite, c'est-à-dire en réalisant des pièces de structure à renfort fibreux et matrice résine.

Les documents US 2013/0017093, EP3019398 et WO 2012/001279 décrivent la réalisation d'une pale d'hélice à partir d'une structure fibreuse à profil aérodynamique à l'intérieur de laquelle est introduite une partie d'un longeron, une extrémité du longeron étant prolongée par une portion renflée destinée à former le pied de la pale d'hélice. La structure fibreuse, qui est réalisée en une seule pièce par tissage tridimensionnel, comporte une zone de déliaison permettant de former un logement à l'intérieur de la structure fibreuse dans lequel est insérée une partie du longeron, le pied de pale étant formé par la portion renflée du longeron qui s'étend à l'extérieur de la structure fibreuse à profil aérodynamique.

La pale d'hélice ainsi obtenue présente à la fois une masse globale allégée et une résistance mécanique importante par la présence en peau d'une structure en matériau composite (renfort fibreux densifié par une matrice).

Cependant, le maintien en position du longeron rapporté dans la structure fibreuse et, par conséquent, du pied de pale d'hélice, peut être délicat dans certains cas, comme par exemple lorsque la pale est soumise à des charges mécaniques importantes, des impacts ou des chocs.

### Exposé de l'invention

Il est donc souhaitable de pouvoir proposer une solution pour la réalisation d'aubes ou pales d'hélice d'aéronef du type décrit ci-avant mais qui présentent une résistance mécanique accrue en particulier au niveau du maintien en position du pied d'aube ou de pale par rapport à la structure fibreuse de profil aérodynamique.

A cet effet, selon l'invention, il est proposé une aube ou pale d'hélice d'aéronef comprenant un renfort fibreux présentant un tissage tridimensionnel entre une pluralité de couches de fils de chaine s'étendant suivant une direction longitudinale et une pluralité de couches de fils de trame s'étendant suivant une direction transversale, le renfort fibreux étant densifié par une matrice, le renfort fibreux comprenant en une seule pièce tissée une partie de pied et une partie de profil aérodynamique s'étendant suivant la direction longitudinale entre la partie de pied et une portion de sommet d'aube et suivant la direction transversale entre une portion de bord d'attaque et une portion de bord de fuite, la partie de profil aérodynamique comportant des première et deuxième faces d'extrados et d'intrados, le renfort fibreux comportant une déliaison formant un logement à l'intérieur dudit renfort fibreux, aube ou pale d'hélice dans laquelle une vessie remplie d'une mousse de conformation est présente dans le logement, et dans laquelle la déliaison s'étend sur une zone de déliaison à l'intérieur de la partie de profil aérodynamique du renfort fibreux comprise entre la partie de pied et la portion de sommet d'aube dans la direction longitudinale et entre la portion de bord d'attaque et la portion de bord de fuite dans la direction transversale, la déliaison débouchant en outre à l'extérieur de la partie de profil aérodynamique du renfort fibreux.

En réalisant ainsi un renfort fibreux dans lequel une partie de pied est intégralement formée, c'est-à-dire tissée en une seule pièce, avec une partie de profil aérodynamique, on assure un parfait maintien en position des parties d'attache (échasse et pied) de l'aube ou pale d'hélice par rapport au profil aérodynamique. En effet, même en cas de sollicitations mécaniques (impacts, chocs) au niveau du profil aérodynamique de l'aube ou pale d'hélice, il n'y a pas de risque de déplacement de la partie de pied par rapport à la partie de profil aérodynamique car celles-ci sont liées entre elles par des parties continûment tissées du renfort.

Selon un premier aspect de l'aube ou pale d'hélice de l'invention, une première partie de fils de la pluralité de couches de fils de trame croise une deuxième partie de fils de la pluralité de couches de fils de trame dans une zone du renfort fibreux située au voisinage de la déliaison suivant la direction transversale, les fils de la première partie de fils de la pluralité de couches de fils de trame s'étendant d'un côté de la déliaison suivant la direction transversale tandis que les fils de la deuxième partie de fils de la pluralité de couches de fils de trame s'étendent de l'autre côté de la déliaison suivant la direction transversale.

Le croisement de fils de trame en amont et/ou en aval de la zone de déliaison suivant la direction transversale permet d'améliorer la tenue de l'ébauche fibreuse dans la zone de déliaison ainsi que le maintien de la pièce de conformation à l'intérieur du renfort fibreux.

Selon un deuxième aspect de l'aube ou pale d'hélice de l'invention, la première partie de fils des couches de fils de trame croise une première fois la deuxième partie de fils des couches de fils de trame dans une zone du renfort fibreux située en amont de la déliaison suivant la direction transversale et croise une deuxième fois la deuxième partie de fils des couches de fils de trame dans une zone du renfort fibreux située en aval de la déliaison suivant la direction transversale.

Selon un troisième aspect de l'aube ou pale d'hélice de l'invention, une première partie de fils de la pluralité de couches de fils de chaine croise une deuxième partie de fils de la pluralité de couches de fils de chaine dans une zone du renfort fibreux située au voisinage de la déliaison suivant la direction longitudinale, les fils de la première partie de fils de la pluralité de couches de fils de chaine s'étendant d'un côté de la déliaison suivant la direction longitudinale tandis que les fils de la deuxième partie de fils de la pluralité de couches de fils de chaine s'étendent de l'autre côté de la déliaison suivant la direction longitudinale.

Le croisement de fils de chaine en amont et/ou en aval de la zone de déliaison suivant la direction longitudinale permet d'améliorer la tenue de l'ébauche fibreuse dans la zone de déliaison ainsi que le maintien de la pièce de conformation à l'intérieur du renfort fibreux.

Selon un cinquième aspect de l'aube ou pale d'hélice de l'invention, la première partie de fils des couches de fils de chaine croise une première fois la deuxième partie de fils des couches de fils de chaine dans une zone du renfort fibreux située en amont de la déliaison suivant la direction longitudinale et croise une deuxième fois la deuxième partie de fils des couches de fils de chaine dans une zone du renfort fibreux située en aval de la déliaison suivant la direction longitudinale.

L'invention a également pour objet un moteur aéronautique comprenant une pluralité de pales selon l'invention.

L'invention concerne encore un aéronef comprenant au moins un moteur selon l'invention.

La présente invention a enfin pour objet un procédé de fabrication d'une aube ou pale d'hélice d'aéronef comprenant au moins:
- la réalisation par tissage tridimensionnel entre une pluralité de couches de fils de chaine et une pluralité de couches de fils de trame d'une structure fibreuse en une seule pièce, la structure comprenant une partie de pied et une partie de profil aérodynamique s'étendant suivant une direction longitudinale entre la partie de pied et une portion de sommet d'aube et suivant une direction transversale entre une portion de bord d'attaque et une portion de bord de fuite, ladite structure comportant une déliaison formant un logement à l'intérieur de la structure fibreuse,
- la mise en forme de la structure fibreuse par introduction d'une vessie dans le logement de l'ébauche fibreuse et par remplissage de la vessie avec une mousse de conformation,
- la densification de la préforme par une matrice pour obtenir une d'une aube ou pale d'hélice ayant un renfort fibreux constitué par ladite préforme et densifié par la matrice,
procédé dans lequel la déliaison s'étend sur une zone à l'intérieur de la partie de profil aérodynamique du renfort fibreux comprise entre la partie de pied et la portion de sommet d'aube dans la direction longitudinale et entre la portion de bord d'attaque et la portion de bord de fuite dans la direction transversale, la déliaison débouchant en outre à l'extérieur de la partie de profil aérodynamique du renfort fibreux.

L'utilisation d'une vessie pour la mise en forme de la structure fibreuse est avantageuse en ce qu'elle permet de minimiser l'ouverture nécessaire pour accéder au logement à l'intérieur de la structure fibreuse. En effet, l'ouverture doit seulement présenter une dimension suffisante pour permettre l'introduction de la vessie, celle-ci étant ensuite remplie avec une mousse de manière à occuper tout le volume du logement, la vessie prenant alors la forme désirée pour conférer sa forme au profil aérodynamique. On réduit ainsi l'impact de l'ouverture du logement sur la résistance mécanique du renfort de l'aube ou pale d'hélice.

Selon un premier aspect du procédé de l'invention, une première partie de fils de la pluralité de couches de fils de trame croise une deuxième partie de fils de la pluralité de couches de fils de trame dans une zone du renfort fibreux située au voisinage de la déliaison suivant la direction transversale, les fils de la première partie de fils de la pluralité de couches de fils de trame s'étendant d'un côté de la déliaison suivant la direction transversale tandis que les fils de la deuxième partie de fils de la pluralité de couches de fils de trame s'étendent de l'autre côté de la déliaison suivant la direction transversale.

Selon un deuxième aspect du procédé de l'invention, la première partie de fils des couches de fils de trame croise une première fois la deuxième partie de fils des couches de fils de trame dans une zone du renfort fibreux située en amont de la déliaison suivant la direction transversale et croise une deuxième fois la deuxième partie de fils des couches de fils de trame dans une zone du renfort fibreux située en aval de la déliaison suivant la direction transversale.

Selon un troisième aspect du procédé de l'invention, une première partie de fils de la pluralité de couches de fils de chaine croise une deuxième partie de fils de la pluralité de couches de fils de chaine dans une zone du renfort fibreux située au voisinage de la déliaison suivant la direction longitudinale, les fils de la première partie de fils de la pluralité de couches de fils de chaine s'étendant d'un côté de la déliaison suivant la direction longitudinale tandis que les fils de la deuxième partie de fils de la pluralité de couches de fils de chaine s'étendent de l'autre côté de la déliaison suivant la direction longitudinale.

Selon un quatrième aspect du procédé de l'invention, la première partie de fils des couches de fils de chaine croise une première fois la deuxième partie de fils des couches de fils de chaine dans une zone du renfort fibreux située en amont de la déliaison suivant la direction longitudinale et dans laquelle la première partie de fils des couches de fils de chaine croise une deuxième fois la deuxième partie de fils des couches de fils de chaine dans une zone du renfort fibreux située en aval de la déliaison suivant la direction longitudinale.

### Brève description des dessins

[Fig. 1] La figure 1 est une vue en perspective d'une aube conformément à un mode de réalisation de l'invention,
[Fig. 2] La figure 2 est une vue schématique illustrant le tissage 3D d'une ébauche fibreuse pour la fabrication de l'aube de la figure 1,
[Fig. 3] La figure 3 est une vue en coupe partielle en sens trame à échelle agrandie d'un ensemble de couches de fils montrant la formation d'une zone de déliaison dans l'ébauche de la figure 2 débouchant au niveau de la portion de bord de fuite,
[Fig. 4] La figure 4 est une vue en coupe partielle en sens trame à échelle agrandie d'un ensemble de couches de fils montrant une variante de réalisation de la zone de déliaison dans l'ébauche de la figure 2 débouchant au niveau de la portion de bord de fuite,
[Fig. 5] La figure 5 est une vue en coupe partielle en sens trame à échelle agrandie d'un ensemble de couches de fils montrant la formation d'une zone de déliaison dans l'ébauche de la figure 2 débouchant au niveau d'une face de l'ébauche de profil aérodynamique,
[Fig. 6] La figure 6 est une vue en coupe en sens chaine d'un ensemble de couches de fils montrant la formation d'une zone de déliaison dans l'ébauche de la figure 2,
[Fig. 7] La figure 7 est une vue en coupe en sens chaine d'un ensemble de couches de fils montrant une variante de réalisation de la zone de déliaison dans l'ébauche de la figure 2,
[Fig. 8] La figure 8 est une vue en perspective montrant l'insertion d'une vessie dans une structure fibreuse issue de l'ébauche fibreuse de la figure 2.
[Fig. 9] La figure 9 est une vue en perspective montrant le remplissage de la vessie de la figure 8 avec une mousse de conformation.

### Description des modes de réalisation

L'invention s'applique d'une manière générale à différents types d'aubes ou pales d'hélice utilisées dans des moteurs d'aéronefs. L'invention trouve une application avantageuse mais non exclusive dans des aubes ou pales d'hélice de grandes dimensions qui, en raison de leur taille, présentent une masse importante ayant un impact significatif sur la masse globale du moteur de l'aéronef. L'aube selon l'invention peut notamment constituer une aube pour roues mobiles carénées telles que des aubes de soufflante ou une aube pour roues mobiles non carénées comme dans les moteurs aéronautiques dits « open rotor ».

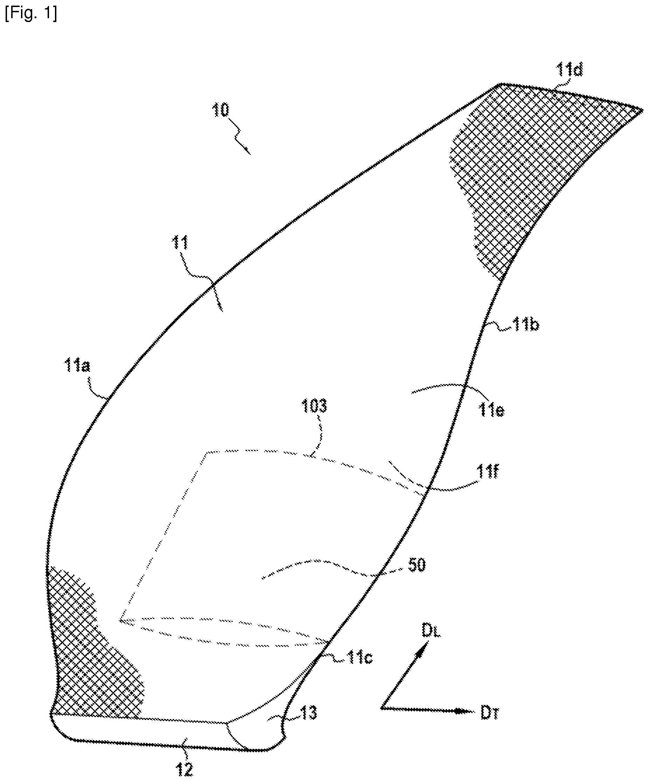

La figure 1 représente une aube 10 destinée à être montée sur un turbopropulseur d'avion qui comprend, un profil aérodynamique 11 destinée à former la partie aérodynamique de la pale, un pied 12 formé par une partie de plus forte épaisseur, par exemple à section en forme de bulbe, prolongé par une échasse 13. Le profil aérodynamique 11 comprend une face extrados 11e et une face intrados 11f et présente en section transversale un profil incurvé d'épaisseur variable entre son bord d'attaque 11a et son bord de fuite 11b suivant une direction transversale D_{T}. Le profil aérodynamique 11 s'étend, suivant une direction longitudinale D_{L}, entre un bord inférieur 11c et un bord supérieur 11d. Le pied 12 s'étend suivant la direction transversale D_{T} sur une longueur inférieure à la longueur du bord inférieur 11c du profil aérodynamique 11.

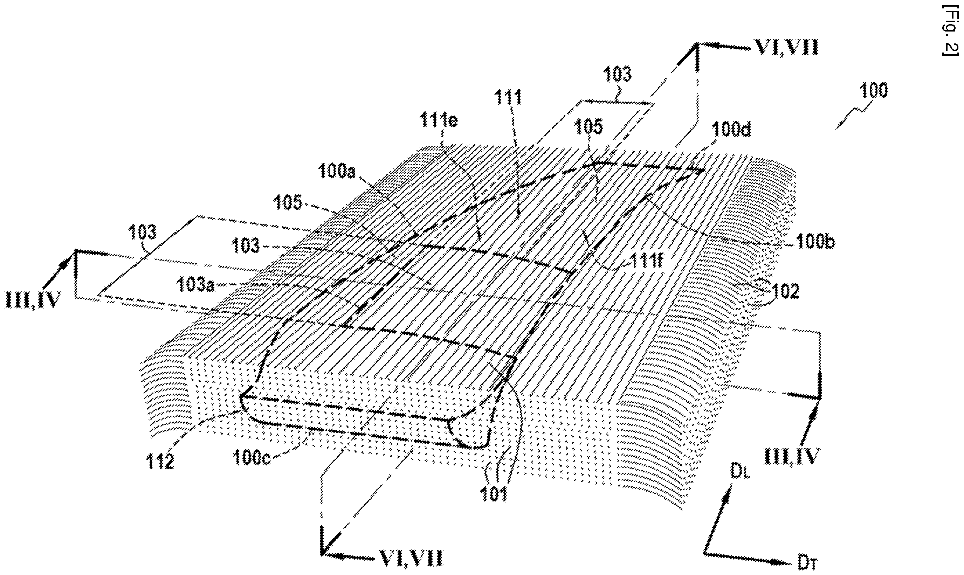

La figure 2 montre très schématiquement une ébauche de structure fibreuse 100 destinée à former la préforme fibreuse de l'aube à réaliser.

L'ébauche de structure fibreuse 100 est obtenue, comme illustrée schématiquement sur la figure 2, par tissage tridimensionnel (3D) réalisé de façon connue au moyen d'un métier à tisser de type jacquard sur lequel on a disposé un faisceau de fils de chaînes 101 ou torons en une pluralité de couches de plusieurs centaines de fils chacune, les fils de chaînes étant liés par des fils de trame 102. L'ébauche de structure fibreuse 100 est tissée en une seule pièce, l'ébauche s'étendant dans une direction longitudinale DL entre une partie inférieure 100c et une partie supérieure 100d et dans une direction transversale DT entre un bord avant 100a et un bord arrière 100b, l'ébauche comprenant une ébauche de profil aérodynamique 111 définissant deux faces 111e et 111f destinées à former respectivement les faces extrados et intrados de l'aube et une ébauche de portion renflée 112 destinée à former ultérieurement un pied d'aube et s'étendant à l'extérieur de l'ébauche de profil aérodynamique 111 suivant la direction longitudinale D_{L} et en retrait des bords avant et arrière 100a et 100b suivant la direction transversale D_{T}.

Dans l'exemple illustré, le tissage 3D est un tissage à armure "interlock". Par tissage "interlock", on entend ici une armure de tissage dans laquelle chaque couche de fils de trame lie plusieurs couches de fils de chaîne avec tous les fils d'une même colonne de trame ayant le même mouvement dans le plan de l'armure.

D'autres types de tissage tridimensionnel connus pourront être utilisés, comme notamment ceux décrits dans le document WO 2006/136755 dont le contenu est incorporé ici par voie de référence. Ce document décrit notamment la réalisation par tissage en une seule pièce de structures fibreuses de renfort pour des pièces telles que des aubes ayant un premier type d'armure à coeur et un deuxième type d'armure en peau qui permettent de conférer à la fois les propriétés mécaniques et aérodynamiques attendues pour ce type de pièce.

L'ébauche fibreuse selon l'invention peut être tissée notamment à partir de fils de fibres de carbone ou de céramique tel que du carbure de silicium.

Au fur et à mesure du tissage de l'ébauche fibreuse dont l'épaisseur et la largeur varient, un certain nombre de fils de chaîne ne sont pas tissés, ce qui permet de définir le contour et l'épaisseur voulue, continûment variable, de l'ébauche 100. Un exemple de tissage 3D évolutif permettant notamment de faire varier l'épaisseur de l'ébauche entre un premier bord destiné à former le bord d'attaque et un deuxième bord d'une épaisseur moindre et destiné à former le bord de fuite est décrit dans le document EP 1 526 285 dont le contenu est incorporé ici par référence.

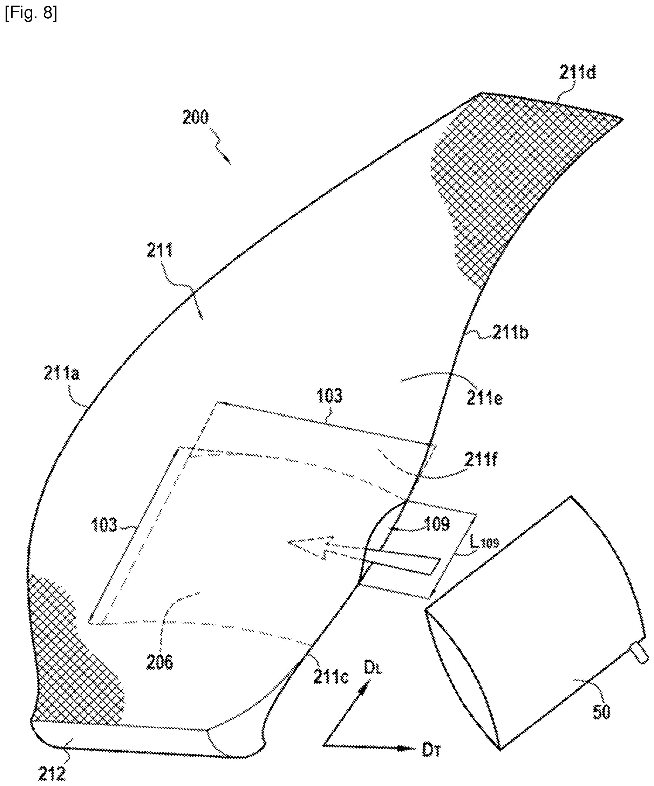

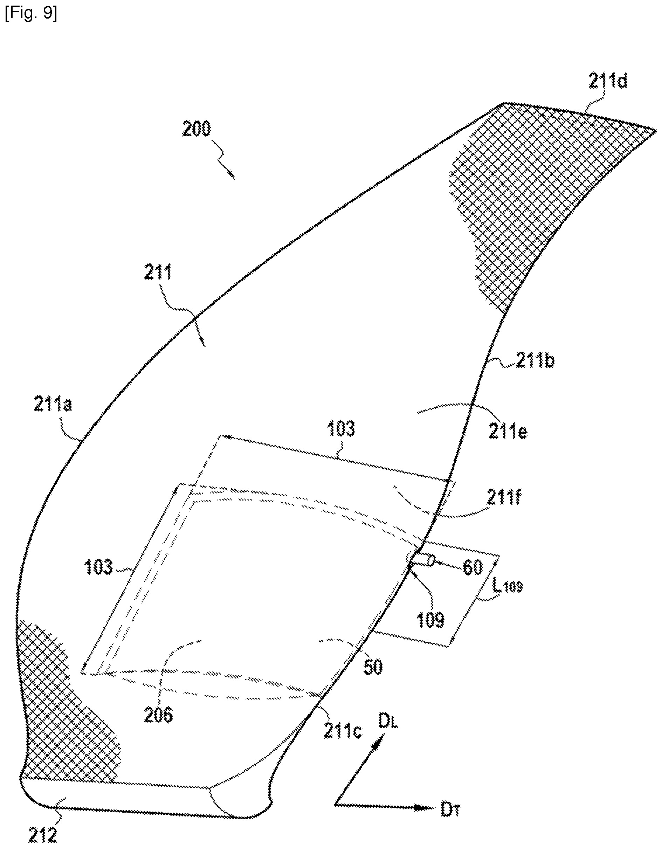

Lors du tissage, une déliaison 103 est réalisée à l'intérieur de l'ébauche fibreuse 100 entre deux couches successives de fils de chaîne, la déliaison 103 s'étendant sur une zone de déliaison délimitée par un contour 103a séparant ladite zone de déliaison d'une zone de liaison 105 dans l'ébauche fibreuse. La déliaison 103 permet de ménager un logement 206 (figure 8) aux dimensions d'une pièce de conformation 50 destinée à être placée à l'intérieur de l'ébauche fibreuse 100 en vue de la formation de la préforme de pale (figure 9).

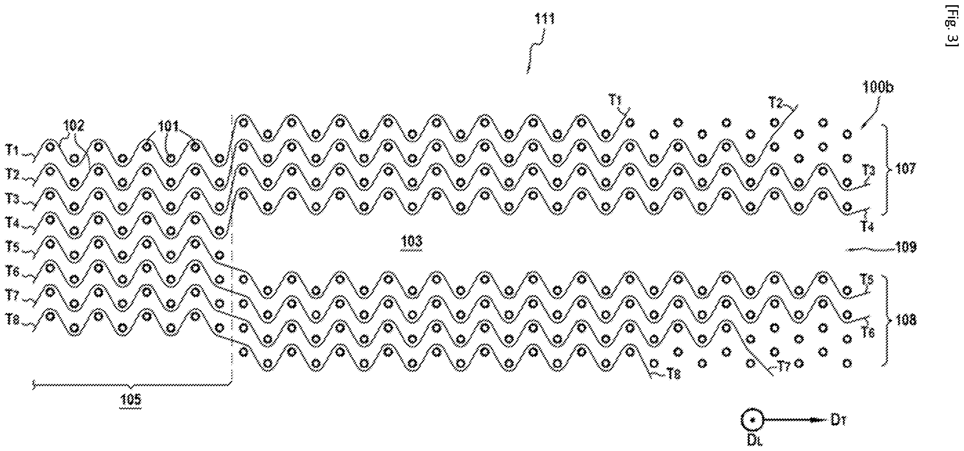

Un mode de tissage 3D à armure interlock de l'ébauche 100 est montré schématiquement par la figure 3. La figure 3 est une vue partielle agrandie d'un plan en coupe chaîne dans l'ébauche de profil aérodynamique 111 de l'ébauche 100 comportant la déliaison 103 (coupe III-III sur la figure 2). Dans cet exemple, l'ébauche 100 comprend 8 couches de fils de chaîne 101 s'étendant sensiblement dans la direction longitudinale D_{L}. Sur la figure 3, les 8 couches de fils de chaîne sont liées par des fils de trame T₁ à T₈ dans la zone de liaison 105 de l'ébauche fibreuse 100, les fils de trame s'étendant sensiblement dans la direction transversale D_{T}. Au niveau de la déliaison 103, les 4 couches de fils de chaîne 101 formant l'ensemble de couches de fils 107 sont liées entre elles par 4 fils de trame T₁ à T₄, de même que les 4 couches de fils de chaîne formant l'ensemble de couches de fils 108 sont liés par 4 fils de trame T₅ et T₈. En d'autres termes, le fait que les fils de trame T₁ à T₄ ne s'étendent pas dans les couches de fils 108 et que les fils de trame T₅ à T₈ ne s'étendent pas dans les couches de fils 107 assure la déliaison 103 qui sépare l'un de l'autre les ensembles de couches de fils de chaîne 107 et 108.

Au niveau de la déliaison 103 de l'exemple de tissage présenté sur la figure 3, les fils de trame T₁ à T₄, d'une part, et les fils de trame T₅ à T₈, d'autre part, sont respectivement disposés de chaque côté de la déliaison 103, les fils de trame T₁ à T₄ liant les quatre premières couches de fils de chaîne formant l'ensemble de couches de fils 107 et les fils de trame T₅ à T₈ liant les quatre dernières couches de fils de chaîne formant l'ensemble de couches de fils 108. Dans l'exemple décrit ici, les fils de trame T₁ et T₂, d'une part, et les fils de trame T₇ et T₈, d'autre part, sont sortis en amont du bord arrière 100b afin de gérer la réduction d'épaisseur dans cette partie du profil aérodynamique.

Toujours dans l'exemple de tissage présenté sur la figure 3, la déliaison 103 s'étend jusqu'au bord arrière 100b de l'ébauche fibreuse destiné à former le bord de fuite 11b de l'aube 10 (figure 1). La déliaison débouche ici à l'extérieur de l'ébauche de profil aérodynamique 111 au niveau du bord arrière 100b dans lequel elle forme une ouverture 109 pour l'introduction d'une pièce de conformation comme décrit ci-après. Selon une variante de réalisation, la déliaison 103 peut déboucher au niveau du bord avant 100a de l'ébauche fibreuse 100 destiné à former le bord d'attaque 11a de l'aube 10.

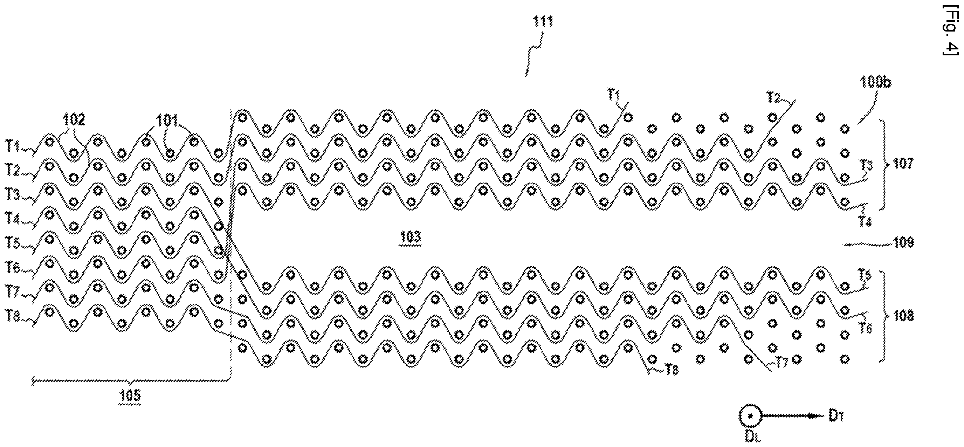

Selon une variante de réalisation illustrée en figure 4 (coupe IV-IV sur la figure 2), une première partie de fils des couches de fils de trame croise une deuxième partie de fils des couches de fils de trame dans une zone de l'ébauche de profil aérodynamique 111 de l'ébauche fibreuse située au voisinage de la zone de déliaison 104 suivant la direction transversale D_{T}, les fils de la première partie de fils de trame 102 s'étendant d'un côté de la déliaison 103 suivant la direction transversale D_{T} tandis que les fils de la deuxième partie de fils de la pluralité de couches de fils de trame 102 s'étendent de l'autre côté de la déliaison 103 suivant la direction transversale D_{T}. Plus précisément, un ou plusieurs fils de trame 102 liant des couches de fils de chaîne formant l'ensemble de couches de fils 107 dans la zone de liaison 105 sont utilisés pour lier des couches de fils de chaîne formant l'ensemble de couches de fils 108 dans la zone de liaison 105 et inversement. Dans l'exemple illustré sur la figure 4, les fils de trame T₃ et T₄, liant des couches de fils de chaîne 101 de l'ensemble de couches de fils 107 dans la zone de liaison 105 sont déviés au début ou en amont de la déliaison 103 suivant la direction transversale D_{T} pour lier des couches de fils de chaîne 101 de l'ensemble de couches de fils 108. De même, les fils de trame T₅ et T₆, liant des couches de fils de chaîne 101 de l'ensemble de couches de fils 108 dans la zone de liaison 105 sont déviés au début ou en amont de la déliaison 103 suivant la direction transversale D_{T} pour lier des couches de fils de chaîne 101 de l'ensemble de couches de fils 107. Le croisement des fils de trame T₃ et T₄ et des fils de trame T₅ et T₆ en amont de la déliaison 103 suivant la direction transversale D_{T} permet d'améliorer la tenue de l'ébauche fibreuse dans la zone de déliaison.

Dans l'exemple de tissage présenté sur la figure 4, la déliaison 103 s'étend jusqu'au bord arrière 100b de l'ébauche fibreuse destiné à former le bord de fuite 11b de l'aube 10 (figure 1). La déliaison débouche ici à l'extérieur de l'ébauche de profil aérodynamique 111 au niveau du bord arrière 100b dans lequel elle forme une ouverture 109 pour l'introduction d'une pièce de conformation comme décrit ci-après. Selon une variante de réalisation, la déliaison 103 peut déboucher au niveau du bord avant 100a de l'ébauche fibreuse 100 destiné à former le bord d'attaque 11a de l'aube 10.

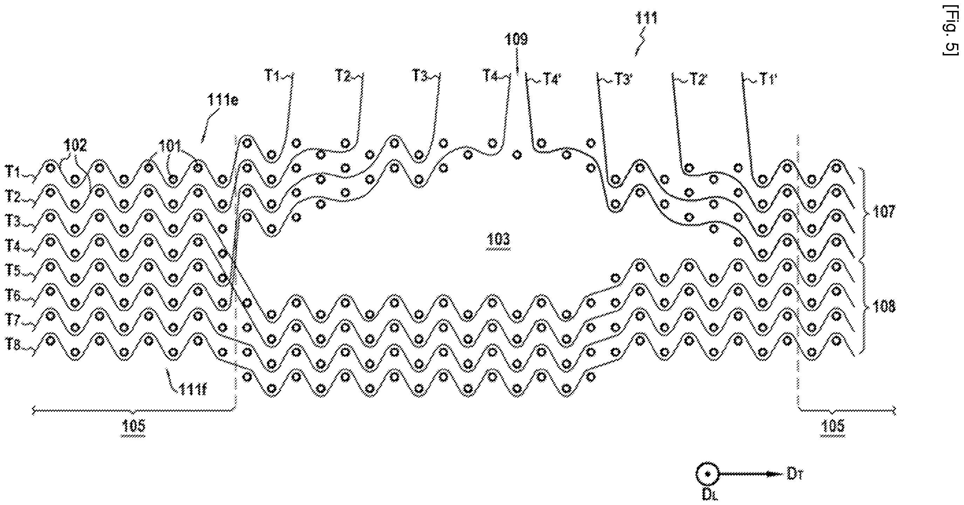

La figure 5 illustre une vue partielle agrandie d'une autre variante de tissage suivant un plan en coupe chaîne dans une partie de l'ébauche 100 comportant la déliaison 103. Dans cette variante, la zone de déliaison 103 débouche sur la face 111e de l'ébauche de profil aérodynamique 111 destinée à former la face extrados 11e de l'aube 10. Dans cet exemple de variante, l'ébauche 100 comprend 8 couches de fils de chaîne 101 s'étendant sensiblement dans la direction longitudinale D_{L}. Sur la figure 5, les 8 couches de fils de chaîne sont liées par des fils de trame T₁ à T₈ dans les zones de liaison 105 de l'ébauche fibreuse 100, les fils de trame s'étendant sensiblement dans la direction transversale D_{T}. Au début de la déliaison 103, les 4 couches de fils de chaîne 101 formant l'ensemble de couches de fils 107 sont liées entre elles par 4 fils de trame T₁ à T₄, de même que les 4 couches de fils de chaîne formant l'ensemble de couches de fils 108 sont liés par 4 fils de trame T₅ et T₈, les fils de trame T₁ à T₄, d'une part, et les fils de trame T₅ à T₈, d'autre part, étant respectivement disposés de chaque côté de la déliaison 103.

Afin de faire déboucher la déliaison 103 sur la face 111e de l'ébauche de profil aérodynamique 111, les fils de trame T₁ à T₄ sont progressivement sortis de l'ébauche pour former une ouverture 109 puis des fils de trame T_{1'} à T_{4'} sont progressivement réintroduis dans l'ébauche pour réaliser la fin de la déliaison 103 et la deuxième zone de liaison 105 qui s'étend vers le bord arrière 100b. On forme ainsi une ouverture 109 permettant l'introduction d'un élément de conformation dans le logement formé par la déliaison 103 à l'intérieur de l'ébauche de profil aérodynamique. Les mêmes sorties de fils de trame comme décrites précédemment peuvent être réalisées avec les fils de trame T₅ et T₈ tout en réintroduisant des fils de trame similaire après l'ouverture afin de faire déboucher la déliaison 103 sur la face 111f de l'ébauche de profil aérodynamique destinée à former la face intrados 11f de l'aube 10.

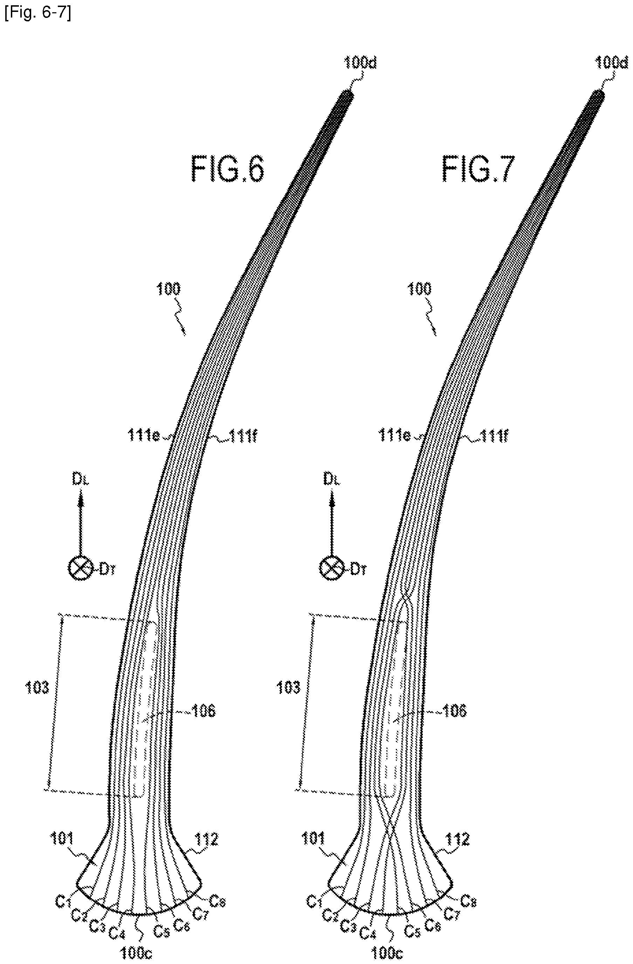

Concernant les fils de chaine 101 dans l'ébauche fibreuse 100, ceux-ci peuvent, suivant un aspect de l'invention, suivre le même trajet depuis la portion renflée 112 jusqu'à la partie supérieure 100d en passant de chaque côté de la déliaison 103 comme représenté sur la figure 6 pour les fils de chaine C₁ à C₈ (coupe VI-VI sur la figure 2).

Suivant un autre aspect de l'invention illustré sur la figure 7 (coupe VII-VII sur la figure 2), une première partie de fils des couches de fils de chaine 101, ici les fils C₃ et C₄, croise une deuxième partie de fils des couches de fils de chaine 101, ici les fils C₅ et C₆, dans une zone de l'ébauche fibreuse 100 située au début ou en amont de la zone de déliaison 104 suivant la direction longitudinale D_{L}, les fils C₃ et C₄ de la première partie de fils des couches de fils de chaine s'étendant d'un côté de la zone de déliaison 104 suivant la direction longitudinale D_{L} tandis que les fils C₅ et C₆ de la deuxième partie de fils des couches de fils de chaine s'étendent de l'autre côté de la zone de déliaison 104 suivant la direction longitudinale D_{L}. Ensuite, les fils C₃ et C₄ croisent de nouveau les fils C₅ et C₆ dans une zone de l'ébauche fibreuse 100 située à la fin ou en aval de la zone de déliaison 104 suivant la direction longitudinale D_{L}. Le croisement des fils de chaine C₃ et C₄ et des fils de chaine C₅ et C₆ en amont et/ou en aval de la zone de déliaison 104 suivant la direction longitudinale D_{L} permet d'améliorer la tenue de l'ébauche fibreuse dans la zone de déliaison. Selon une variante de réalisation, une partie des fils de chaine peuvent se croiser seulement en amont ou en aval de la zone de déliaison 104 suivant la direction longitudinale D_{L}.

Dans l'exemple décrit ici, la déliaison 103 est réalisée entre deux colonnes adjacentes de fils de trame. Sur toutes les colonnes de fils de trame, la déliaison est également réalisée le long de deux colonnes adjacentes de fils de chaine. Toutefois, en fonction de la forme de la zone de déliaison que l'on souhaite obtenir, la déliaison selon l'invention peut être évolutive. Dans ce cas, la déliaison peut être réalisée entre des colonnes de fils de trame différentes suivant la direction transversale D_{T} et/ou la direction longitudinale D_{L}.

Selon encore une variante de réalisation, la déliaison peut déboucher au niveau de la partie supérieure 100d de l'ébauche de profil aérodynamique 111 destinée à former le bord supérieur 11d de l'aube 10. Dans ce cas, la déliaison, comme par exemple la déliaison illustrée sur la figure 6, est prolongée jusqu'à la partie supérieure 110d suivant la direction longitudinale D_{L}.

Une fois l'ébauche de structure fibreuse 100 tissée on procède à la découpe des fils flottés présents à l'extérieur de la masse tissée (phase dite de « trimming »). Ensuite, le contour de la préforme à plat est découpé, par exemple au jet d'eau.

On obtient alors, comme illustrée sur la figure 8, une structure fibreuse 200 tissée en une seule pièce et ayant un profil aérodynamique 211 et une portion renflée 212, le profil aérodynamique 211 s'étendant dans la direction longitudinale D_{L} entre une extrémité inférieure 211c et une extrémité supérieure 211d et dans la direction transversale DT entre un bord avant ou portion de bord d'attaque 211a et un bord arrière ou portion de bord de fuite 211b destinés à former respectivement les bords d'attaque et de fuite de l'aube. Le profil aérodynamique 211 comporte deux faces 211e et 211f destinées à former respectivement les faces extrados et intrados de l'aube. La structure fibreuse 200 comporte la déliaison 103 s'étendant entre les bords avant et arrière 211a et 211d du profil aérodynamique 211 suivant la direction transversale D_{T} et entre les extrémités inférieure et supérieure 211c et 211d du profil aérodynamique 211 suivant la direction longitudinale D_{L}. La portion renflée 212 située à l'extérieur du profil aérodynamique est destinée à former le pied 12 de l'aube 10.

La déliaison 103 délimite à l'intérieur du profil aérodynamique 211 un logement interne 206 accessible via l'ouverture 109 présente du côté du bord arrière ou portion de bord de fuite 211b. Sur la figure 8, une vessie 50 est introduite dans le logement interne 206 via l'ouverture 109. L'ouverture 109 ne s'étend pas nécessairement sur toute la longueur de la déliaison comme dans l'exemple décrit ici où la taille de l'ouverture 109 a été optimisée en ce qu'elle s'étend suivant la direction longitudinale D_{L} sur une longueur minimale L₁₀₉ permettant l'introduction de la vessie 50 dans le logement 206 par sa plus petite dimension ou par déformation de celle-ci, l'opérateur utilisant des outillages adaptées pour la mise en place de la pièce de conformation dans le logement.

La conformation de la structure fibreuse 200 est poursuivie par le remplissage de la vessie 50 avec une mousse de conformation 60 comme illustrée sur la figure 9. La mousse 60 correspond à une mousse expansible. Malgré sa souplesse, la vessie 50 une fois gonflée avec la mousse 60 occupe le volume et prend la forme du logement 206 de manière définir la forme du profil aérodynamique de l'aube ou de la pale d'hélice. La mousse est maintenue sous pression pendant le temps nécessaire à son durcissement.

Une fois la mousse de conformation 60 durcie, on procède à la densification de la préforme fibreuse d'aube. L'ouverture 109 peut être refermée par couture avant la densification.

Le durcissement de la mousse peut être réalisé avant la densification de la préforme ou bien en même temps.

La densification de la préforme fibreuse consiste à combler la porosité de la préforme, dans tout ou partie du volume de celle-ci, par le matériau constitutif de la matrice.

La matrice du matériau composite peut être obtenue de façon connue en soi suivant le procédé par voie liquide.

Le procédé par voie liquide consiste à imprégner la préforme par une composition liquide contenant un précurseur organique du matériau de la matrice. Le précurseur organique se présente habituellement sous forme d'un polymère, tel qu'une résine, éventuellement dilué dans un solvant. La préforme est placée dans un moule pouvant être fermé de manière étanche avec un logement ayant la forme de la pièce finale moulée et pouvant notamment présenter une forme vrillée correspondant à la forme définitive de la pale. Ensuite, on referme le moule et on injecte le précurseur liquide de matrice (par exemple une résine) dans tout le logement pour imprégner toute la partie fibreuse de la préforme.

La transformation du précurseur en matrice organique, à savoir sa polymérisation, est réalisée par traitement thermique, généralement par chauffage du moule, après élimination du solvant éventuel et réticulation du polymère, la préforme étant toujours maintenue dans le moule ayant une forme correspondant à celle de l'aube. La matrice organique peut être notamment obtenue à partir de résines époxydes, telle que la résine époxyde à hautes performances vendue sous la référence PR 520 par la société CYTEC, ou de précurseurs liquides de matrices carbone ou céramique.

Dans le cas de la formation d'une matrice carbone ou céramique, le traitement thermique consiste à pyrolyser le précurseur organique pour transformer la matrice organique en une matrice carbone ou céramique selon le précurseur utilisé et les conditions de pyrolyse. A titre d'exemple, des précurseurs liquides de carbone peuvent être des résines à taux de coke relativement élevé, telles que des résines phénoliques, tandis que des précurseurs liquides de céramique, notamment de SiC, peuvent être des résines de type polycarbosilane (PCS) ou polytitanocarbosilane (PTCS) ou polysilazane (PSZ). Plusieurs cycles consécutifs, depuis l'imprégnation jusqu'au traitement thermique, peuvent être réalisés pour parvenir au degré de densification souhaité.

Selon un aspect de l'invention, la densification de la préforme fibreuse peut être réalisée par le procédé bien connu de moulage par transfert dit RTM ("Resin Transfert Moulding"). Conformément au procédé RTM, on place la préforme fibreuse dans un moule présentant la forme extérieure de la pale. Une résine thermodurcissable est injectée dans l'espace interne délimité entre la pièce en matériau rigide et le moule et qui comprend la préforme fibreuse. Un gradient de pression est généralement établi dans cet espace interne entre l'endroit où est injecté la résine et les orifices d'évacuation de cette dernière afin de contrôler et d'optimiser l'imprégnation de la préforme par la résine.

La résine utilisée peut être, par exemple, une résine époxyde. Les résines adaptées pour les procédés RTM sont bien connues. Elles présentent de préférence une faible viscosité pour faciliter leur injection dans les fibres. Le choix de la classe de température et/ou la nature chimique de la résine est déterminé en fonction des sollicitations thermomécaniques auxquelles doit être soumise la pièce. Une fois la résine injectée dans tout le renfort, on procède à sa polymérisation par traitement thermique conformément au procédé RTM.

Après l'injection et la polymérisation, la pièce est démoulée. Au final, la pièce est détourée pour enlever l'excès de résine et les chanfreins sont usinés. Aucun autre usinage n'est nécessaire puisque, la pièce étant moulée, elle respecte les cotes exigées. On obtient alors une aube en matériau composite 10 telle que représentée sur la figure 1.

## Revendications

1. Aube ou pale d'hélice d'aéronef (10) comprenant un renfort fibreux (200) présentant un tissage tridimensionnel entre une pluralité de couches de fils de chaine (101) et une pluralité de couches de fils de trame (102), le renfort fibreux étant densifié par une matrice, le renfort fibreux (200) comprenant en une seule pièce tissée une partie de pied (212) et une partie de profil aérodynamique (211) s'étendant suivant une direction longitudinale (D_{L}) entre la partie de pied et une portion de sommet d'aube (211d) et suivant une direction transversale (D_{T}) entre une portion de bord d'attaque (211a) et une portion de bord de fuite (211b), la partie de profil aérodynamique (211) comportant des première et deuxième faces d'extrados et d'intrados (211e, 211f), le renfort fibreux comportant une déliaison (103) formant un logement (206) à l'intérieur dudit renfort fibreux, aube ou pale d'hélice dans laquelle une vessie (50) remplie d'une mousse de conformation (60) est présente dans le logement, et dans laquelle la déliaison (103) s'étend sur une zone de déliaison à l'intérieur de la partie de profil aérodynamique (211) du renfort fibreux (200) comprise entre la partie de pied (212) et la portion de sommet d'aube (211d) dans la direction longitudinale et entre la portion de bord d'attaque (211a) et la portion de bord de fuite (211b) dans la direction transversale, la déliaison (103) débouchant en outre à l'extérieur de la partie de profil aérodynamique du renfort fibreux.

2. Aube ou pale d'hélice selon la revendication 1, dans laquelle une première partie de fils (T₃, T₄) de la pluralité de couches de fils de trame (102) croise une deuxième partie de fils (T₅, T₆) de la pluralité de couches de fils de trame (102) dans une zone du renfort fibreux (200) située au voisinage de la déliaison (103) suivant la direction transversale (D_{T}), les fils de la première partie de fils de la pluralité de couches de fils de trame s'étendant d'un côté de la déliaison suivant la direction transversale tandis que les fils de la deuxième partie de fils de la pluralité de couches de fils de trame s'étendent de l'autre côté de la déliaison (103) suivant la direction transversale.

3. Aube ou pale d'hélice selon la revendication 2, dans laquelle la première partie de fils (T₃, T₄) des couches de fils de trame (102) croise une première fois la deuxième partie de fils (T₅, T₆) des couches de fils de trame (102) dans une zone du renfort fibreux (200) située en amont de la déliaison (103) suivant la direction transversale (D_{T}) et dans laquelle la première partie de fils des couches de fils de trame croise une deuxième fois la deuxième partie de fils des couches de fils de trame dans une zone du renfort fibreux située en aval de la déliaison (103) suivant la direction transversale.

4. Aube ou pale d'hélice selon l'une quelconque des revendications 1 à 3, dans laquelle une première partie de fils (T₃, T₄) de la pluralité de couches de fils de chaine (101) croise une deuxième partie de fils (T₅, T₆) de la pluralité de couches de fils de chaine (101) dans une zone du renfort fibreux (200) située au voisinage de la déliaison (103) suivant la direction longitudinale (D_{L}), les fils de la première partie de fils de la pluralité de couches de fils de chaine s'étendant d'un côté de la déliaison (103) suivant la direction longitudinale tandis que les fils de la deuxième partie de fils de la pluralité de couches de fils de chaine s'étendent de l'autre côté de la déliaison (103) suivant la direction longitudinale.

5. Aube ou pale d'hélice selon la revendication 4, dans laquelle la première partie de fils (T₃, T₄) des couches de fils de chaine (102) croise une première fois la deuxième partie de fils (T₅, T₆) des couches de fils de chaine (102) dans une zone du renfort fibreux (200) située en amont de la déliaison (103) suivant la direction longitudinale (D_{L}) et dans laquelle la première partie de fils des couches de fils de chaine croise une deuxième fois la deuxième partie de fils des couches de fils de chaine dans une zone du renfort fibreux située en aval de la déliaison (103) suivant la direction longitudinale.

6. Moteur aéronautique comprenant une pluralité de pales selon l'une quelconque des revendications 1 à 5.

7. Aéronef comprenant au moins un moteur selon la revendication 6.

8. Procédé de fabrication d'une aube ou pale d'hélice d'aéronef (10) comprenant au moins:
- la réalisation par tissage tridimensionnel entre une pluralité de couches de fils de chaine (101) et une pluralité de couches de fils de trame (102) d'une structure fibreuse (200) en une seule pièce, la structure comprenant une partie de pied (212) et une partie de profil aérodynamique (211) s'étendant suivant une direction longitudinale (D_{L}) entre la partie de pied et une portion de sommet d'aube (211) et suivant une direction transversale (D_{T}) entre une portion de bord d'attaque (211a) et une portion de bord de fuite (211b), ladite structure comportant une déliaison (103) formant un logement (206) à l'intérieur de la structure fibreuse (200),
- la mise en forme de la structure fibreuse (200) par introduction d'une vessie (50) dans le logement (206) de la structure fibreuse (200) et par remplissage de la vessie avec une mousse de conformation (60),
- la densification de la préforme par une matrice pour obtenir une d'une aube ou pale d'hélice (10) ayant un renfort fibreux constitué par ladite préforme et densifié par la matrice,
**caractérisé en ce que** la déliaison (103) s'étend sur une zone de déliaison à l'intérieur de la partie de profil aérodynamique (211) du renfort fibreux comprise entre la partie de pied (212) et la portion de sommet d'aube (211d) dans la direction longitudinale et entre la portion de bord d'attaque (211a) et la portion de bord de fuite (211b) dans la direction transversale, la déliaison (103) débouchant à l'extérieur de la partie de profil aérodynamique (211) du renfort fibreux.

9. Procédé selon la revendication 8, dans lequel une première partie de fils (T₃, T₄) de la pluralité de couches de fils de trame (102) croise une deuxième partie de fils (T₅, T₆) de la pluralité de couches de fils de trame (102) dans une zone du renfort fibreux (200) située au voisinage de la déliaison (103) suivant la direction transversale (D_{T}), les fils de la première partie de fils de la pluralité de couches de fils de trame s'étendant d'un côté de la déliaison (103) suivant la direction transversale tandis que les fils de la deuxième partie de fils de la pluralité de couches de fils de trame s'étendent de l'autre côté de la déliaison (103) suivant la direction transversale.

10. Procédé selon la revendication 9, dans lequel la première partie de fils (T₃, T₄) des couches de fils de trame (102) croise une première fois la deuxième partie de fils (T₅, T₆) des couches de fils de trame (102) dans une zone du renfort fibreux (200) située en amont de la déliaison (103) suivant la direction transversale (D_{T}) et dans laquelle la première partie de fils des couches de fils de trame croise une deuxième fois la deuxième partie de fils des couches de fils de trame dans une zone du renfort fibreux située en aval de la déliaison (103) suivant la direction transversale.

11. Procédé selon l'une quelconque des revendications 8 à 10, dans lequel une première partie de fils (T₃, T₄) de la pluralité de couches de fils de chaine (101) croise une deuxième partie de fils (T₅, T₆) de la pluralité de couches de fils de chaine (101) dans une zone du renfort fibreux (200) située au voisinage de la déliaison (103) suivant la direction longitudinale (D_{L}), les fils de la première partie de fils de la pluralité de couches de fils de chaine s'étendant d'un côté de la déliaison (103) suivant la direction longitudinale tandis que les fils de la deuxième partie de fils de la pluralité de couches de fils de chaine s'étendent de l'autre côté de la déliaison (103) suivant la direction longitudinale.

12. Procédé selon la revendication 11, dans lequel la première partie de fils (T₃, T₄) des couches de fils de chaine (102) croise une première fois la deuxième partie de fils (T₅, T₆) des couches de fils de chaine (102) dans une zone du renfort fibreux (200) située en amont de la déliaison (103) suivant la direction longitudinale (D_{L}) et dans laquelle la première partie de fils des couches de fils de chaine croise une deuxième fois la deuxième partie de fils des couches de fils de chaine dans une zone du renfort fibreux située en aval de la déliaison (103) suivant la direction longitudinale.

## Patentansprüche

1. Schaufel oder Blatt einer Luftschraube eines Fluggeräts (10), umfassend eine Faserverstärkung (200), die eine dreidimensionale Webung zwischen einer Vielzahl von Schichten aus Kettfäden (101) und einer Vielzahl von Schichten aus Schussfäden (102) aufweist, wobei die Faserverstärkung durch eine Matrix verdichtet ist, wobei die Faserverstärkung (200) aus einem einzigen gewebten Teil einen Fußteil (212) und einen aerodynamischen Profilteil (211) umfasst, der sich in einer Längsrichtung (D_{L}) zwischen dem Fußteil und einem Schaufelspitzenabschnitt (211d) und in einer Querrichtung (D_{T}) zwischen einem Vorderkantenabschnitt (211a) und einem Hinterkantenabschnitt (211b) erstreckt, wobei der aerodynamische Profilteil (211) eine erste und zweite Oberseiten- und Unterseitenfläche (211e, 211f) aufweist, wobei die Faserverstärkung eine Entbindung (103) aufweist, die eine Aufnahme (206) im Inneren der Faserverstärkung, der Schaufel oder des Blatts einer Luftschraube bildet, wobei eine mit einem anpassenden Schaum (60) gefüllte Hülle (50) in der Aufnahme vorhanden ist und wobei sich die Entbindung (103) auf einem Entbindungsbereich im Inneren des aerodynamischen Profilteils (211) der Faserverstärkung (200) erstreckt, der zwischen dem Fußteil (212) und dem Schaufelspitzenabschnitt (211d) in der Längsrichtung und zwischen dem Vorderkantenabschnitt (211a) und dem Hinterkantenabschnitt (211b) in der Querrichtung liegt, wobei die Entbindung (103) ferner außerhalb des aerodynamischen Profilteils der Faserverstärkung ausmündet.

2. Schaufel oder Blatt einer Luftschraube nach Anspruch 1, wobei ein erster Teil von Fäden (T₃, T₄) der Vielzahl von Schichten aus Schussfäden (102) einen zweiten Teil von Fäden (T₅, T₆) der Vielzahl von Schichten aus Schussfäden (102) in einem Bereich der Faserverstärkung (200) kreuzt, der sich in der Nähe der Entbindung (103) in der Querrichtung (D_{T}) befindet, wobei sich die Fäden des ersten Teils von Fäden der Vielzahl von Schichten aus Schussfäden auf einer Seite der Entbindung in der Querrichtung erstrecken, wohingegen sich die Fäden des zweiten Teils von Fäden der Vielzahl von Schichten aus Schussfäden auf der anderen Seite der Entbindung (103) in der Querrichtung erstrecken.

3. Schaufel oder Blatt einer Luftschraube nach Anspruch 2, wobei der erste Teil von Fäden (T₃, T₄) der Schichten aus Schussfäden (102) ein erstes Mal den zweiten Teil von Fäden (T₅, T₆) der Schichten aus Schussfäden (102) in einem Bereich der Faserverstärkung (200) kreuzt, der sich vor der Entbindung (103) in der Querrichtung (D_{T}) befindet und wobei der erste Teil von Fäden der Schichten aus Schussfäden ein zweites Mal den zweiten Teil von Fäden der Schichten aus Schussfäden in einem Bereich der Faserverstärkung kreuzt, der sich nach der Entbindung (103) in der Querrichtung befindet.

4. Schaufel oder Blatt einer Luftschraube nach einem der Ansprüche 1 bis 3, wobei ein erster Teil von Fäden (T₃, T₄) der Vielzahl von Schichten aus Kettfäden (101) einen zweiten Teil von Fäden (T₅, T₆) der Vielzahl von Schichten aus Kettfäden (101) in einem Bereich der Faserverstärkung (200) kreuzt, der sich in der Nähe der Entbindung (103) in der Längsrichtung (D_{L}) befindet, wobei sich die Fäden des ersten Teils von Fäden der Vielzahl von Schichten aus Kettfäden auf einer Seite der Entbindung (103) in der Längsrichtung erstrecken, wohingegen sich die Fäden des zweiten Teils von Fäden der Vielzahl von Schichten aus Kettfäden auf der anderen Seite der Entbindung (103) in der Längsrichtung erstrecken.

5. Schaufel oder Blatt einer Luftschraube nach Anspruch 4, wobei der erste Teil von Fäden (T₃, T₄) der Schichten aus Kettfäden (102) ein erstes Mal den zweiten Teil von Fäden (T₅, T₆) der Schichten aus Kettfäden (102) in einem Bereich der Faserverstärkung (200) kreuzt, der sich vor der Entbindung (103) in der Längsrichtung (D_{L}) befindet und wobei der erste Teil von Fäden der Schichten aus Kettfäden ein zweites Mal den zweiten Teil von Fäden der Schichten aus Kettfäden in einem Bereich der Faserverstärkung kreuzt, der sich nach der Entbindung (103) in der Längsrichtung befindet.

6. Flugzeugmotor, der eine Vielzahl von Blättern nach einem der Ansprüche 1 bis 5 umfasst.

7. Fluggerät, umfassend mindestens einen Motor nach Anspruch 6.

8. Verfahren zur Herstellung einer Schaufel oder eines Blatts einer Luftschraube eines Fluggeräts (10), das mindestens umfasst:
- das Herstellen durch dreidimensionale Webung zwischen einer Vielzahl von Schichten aus Kettfäden (101) und einer Vielzahl von Schichten aus Schussfäden (102) einer Faserstruktur (200) in einem einzigen Stück, wobei die Struktur einen Fußteil (212) und einen aerodynamischen Profilteil (211) umfasst, der sich in einer Längsrichtung (D_{L}) zwischen dem Fußteil und einem Schaufelspitzenabschnitt (211) und in einer Querrichtung (D_{T}) zwischen einem Vorderkantenabschnitt (211a) und einem Hinterkantenabschnitt (211b) erstreckt, wobei die Struktur eine Entbindung (103) aufweist, die eine Aufnahme (206) im Inneren der Faserstruktur (200) bildet,
- das Formen der Faserstruktur (200) durch Einsetzen einer Hülle (50) in die Aufnahme (206) der Faserstruktur (200) und durch Füllen der Hülle mit einem anpassenden Schaum (60),
- das Verdichten der Vorform durch eine Matrix, um eine Schaufel oder ein Blatt einer Luftschraube (10) mit einer Faserverstärkung zu erhalten, die von der Vorform gebildet und durch die Matrix verdichtet ist,
**dadurch gekennzeichnet, dass** sich die Entbindung (103) auf einem Entbindungsbereich im Inneren des aerodynamischen Profilteils (211) der Faserverstärkung erstreckt, der zwischen dem Fußteil (212) und dem Schaufelspitzenabschnitt (211d) in der Längsrichtung und zwischen dem Vorderkantenabschnitt (211a) und dem Hinterkantenabschnitt (211b) in der Querrichtung liegt, wobei die Entbindung (103) außerhalb des aerodynamischen Profilteils (211) der Faserverstärkung ausmündet.

9. Verfahren nach Anspruch 8, wobei ein erster Teil von Fäden (T₃, T₄) der Vielzahl von Schichten aus Schussfäden (102) einen zweiten Teil von Fäden (T₅, T₆) der Vielzahl von Schichten aus Schussfäden (102) in einem Bereich der Faserverstärkung (200) kreuzt, der sich in der Nähe der Entbindung (103) in der Querrichtung (D_{T}) befindet, wobei sich die Fäden des ersten Teils von Fäden der Vielzahl von Schichten aus Schussfäden auf einer Seite der Entbindung (103) in der Querrichtung erstrecken, wohingegen sich die Fäden des zweiten Teils von Fäden der Vielzahl von Schichten aus Schussfäden auf der anderen Seite der Entbindung (103) in der Querrichtung erstrecken.

10. Verfahren nach Anspruch 9, wobei der erste Teil von Fäden (T₃, T₄) der Schichten aus Schussfäden (102) ein erstes Mal den zweiten Teil von Fäden (T₅, T₆) der Schichten aus Schussfäden (102) in einem Bereich der Faserverstärkung (200) kreuzt, der sich vor der Entbindung (103) in der Querrichtung (D_{T}) befindet und wobei der erste Teil von Fäden der Schichten aus Schussfäden ein zweites Mal den zweiten Teil von Fäden der Schichten aus Schussfäden in einem Bereich der Faserverstärkung kreuzt, der sich nach der Entbindung (103) in der Querrichtung befindet.

11. Verfahren nach einem der Ansprüche 8 bis 10, wobei ein erster Teil von Fäden (T₃, T₄) der Vielzahl von Schichten aus Kettfäden (101) einen zweiten Teil von Fäden (T₅, T₆) der Vielzahl von Schichten aus Kettfäden (101) in einem Bereich der Faserverstärkung (200) kreuzt, der sich in der Nähe der Entbindung (103) in der Längsrichtung (D_{L}) befindet, wobei sich die Fäden des ersten Teils von Fäden der Vielzahl von Schichten aus Kettfäden auf einer Seite der Entbindung (103) in der Längsrichtung erstrecken, wohingegen sich die Fäden des zweiten Teils von Fäden der Vielzahl von Schichten aus Kettfäden auf der anderen Seite der Entbindung (103) in der Längsrichtung erstrecken.

12. Verfahren nach Anspruch 11, wobei der erste Teil von Fäden (T₃, T₄) des Schichten aus Kettfäden (102) ein erstes Mal den zweiten Teil von Fäden (T₅, T₆) der Schichten aus Kettfäden (102) in einem Bereich der Faserverstärkung (200) kreuzt, der sich vor der Entbindung (103) in der Längsrichtung (D_{L}) befindet und wobei der erste Teil von Fäden der Schichten aus Kettfäden ein zweites Mal den zweiten Teil von Fäden der Schichten aus Kettfäden in einem Bereich der Faserverstärkung kreuzt, der sich nach der Entbindung (103) in der Längsrichtung befindet.

## Claims

1. An aircraft (10) propeller blade or vane comprising a fibrous reinforcement (200) having a three-dimensional weave between a plurality of warp yarn layers (101) and a plurality of weft yarn layers (102), the fibrous reinforcement being densified by a matrix, the fibrous reinforcement (200) comprising, in a single woven piece, a root part (212) and an aerodynamic profile part (211) extending along a longitudinal direction (D_{L}) between the root part and a blade tip portion (211d) and along a transverse direction (D_{T}) between a leading edge portion (211a) and a trailing edge portion (211b), the aerodynamic profile part (211) including first and second suction side and pressure side faces (211e, 211f), the fibrous reinforcement including a separation (103) forming a housing (206) inside said fibrous reinforcement, propeller blade or vane wherein a bladder (50) filled with a shaping foam (60) is present in the housing, and wherein the separation (103) extends over a separation zone inside the aerodynamic profile part (211) of the fibrous reinforcement (200) comprised between the root part (212) and the blade tip portion (211d) in the longitudinal direction and between the leading edge portion (211a) and the trailing edge portion (211b) in the transverse direction, the separation (103) further opening to the outside of the aerodynamic profile part of the fibrous reinforcement.

2. The propeller blade or vane according to claim 1, wherein a first yarn part (T₃, T₄) of the plurality of weft yarn layers (102) crosses a second yarn part (T₅, T₆) of the plurality of warp yarn layers (102) in a zone of the fibrous reinforcement (200) located in proximity to the separation (103) along the transverse direction (D_{T}), the yarns of the first yarn part of the plurality of weft yarn layers extending on one side of the separation along the transverse direction while the yarns of the second yarn part of the plurality of weft yarn layers extend from the other side of the separation (103) along the transverse direction.

3. The propeller blade or vane according to claim 2, wherein the first yarn part (T₃, T₄) of the weft yarn layers (102) crosses a first time the second yarn part (T₅, T₆) of the weft yarn layers (102) in a zone of the fibrous reinforcement (200) located upstream of the separation (103) along the transverse direction (D_{T}) and wherein the first yarn part of the weft yarn layers crosses a second time the second yarn part of the weft yarn layers in a zone of the fibrous reinforcement located downstream of the separation (103) along the transverse direction.

4. The propeller blade or vane according to any one of claims 1 to 3, wherein a first yarn part (T₃, T₄) of the plurality of warp yarn layers (101) crosses a second yarn part (T₅, T₆) of the plurality of warp yarn layers (101) in a zone of the fibrous reinforcement (200) located in proximity to the separation (103) along the longitudinal direction (D_{L}), the yarns of the first yarn part of the plurality of warp yarn layers extending on one side of the separation (103) along the longitudinal direction, while the yarns of the second yarn part of the plurality of warp yarn layers extend from the other side of the separation (103) along the longitudinal direction.

5. The propeller blade or vane according to claim 4, wherein the first yarn part (T₃, T₄) of the warp yarn layers (102) crosses a first time the second yarn part (T₅, T₆) of the warp yarn layers (102) in a zone of the fibrous reinforcement (200) located upstream of the separation (103) along the longitudinal direction (D_{L}) and wherein the first yarn part of the warp yarn layers crosses a second time the second yarn part of the warp yarn layers in a zone of the fibrous reinforcement located downstream of the separation (103) along the longitudinal direction.

6. An aeronautical engine comprising a plurality of blades according to any one of claims 1 to 5.

7. An aircraft comprising at least one engine according to claim 6.

8. A method for manufacturing an aircraft (10) propeller blade or vane comprising at least:
- producing, by three-dimensional weaving between a plurality of warp yarn layers (101) and a plurality of weft yarns layers, (102) a fibrous structure (200) in a single piece, the structure comprising a root part (212) and an aerodynamic profile part (211) extending along a longitudinal direction (D_{L}) between the root part and a blade tip portion (211) and along a transverse direction (D_{T}) between a leading edge portion (211a) and a trailing edge portion (211b), said structure including a separation (103) forming a housing (206) inside the fibrous structure (200),
- shaping the fibrous structure (200) by introducing a bladder (50) into the housing (206) of the fibrous structure (200) and by filling the bladder with a shaping foam (60),
- densifying the preform using a matrix to obtain one of a propeller blade or vane (10) having a fibrous reinforcement consisting of said preform and densified by the matrix,
**characterized in that** the separation (103) extends over a separation zone inside the aerodynamic profile part (211) of the fibrous reinforcement comprised between the root part (212) and the blade tip portion (211d) in the longitudinal direction and between the leading edge portion (211a) and the trailing edge portion (211b) in the transverse direction, the separation (103) opening to the outside of the aerodynamic profile part (211) of the fibrous reinforcement.

9. The method according to claim 8, wherein a first yarn part (T₃, T₄ of the plurality of weft yarn layers (102) crosses a second yarn part (T₅, T₆) of the plurality of weft yarn layers (102) in a zone of the fibrous reinforcement (200) located in proximity to the separation (103) along the transverse direction (D_{T}), the yarns of the first yarn part of the plurality of weft yarn layers extending on one side of the separation (103) along the transverse direction while the yarns of the second yarn part of the plurality of weft yarn layers extend from the other side of the separation (103) along the transverse direction.

10. The method according to claim 9, wherein the first yarn part (T₃, T₄ of the weft yarn layers (102) crosses a first time the second yarn part (T₅, T₆) of the weft yarn layers (102) in a zone of the fibrous reinforcement (200) located upstream of the separation (103) along the transverse direction (D_{T}) and wherein the first yarn part of the weft yarn layers crosses a second time the second yarn part of the weft yarn layers in a zone of the fibrous reinforcement located downstream of the separation (103) along the transverse direction.

11. The method according to any one of claims 8 to 10, wherein a first yarn part (T₃, T₄) of the plurality of warp yarn layers (101) crosses a second yarn part (T₅, T₆) of the plurality of warp yarn layers (101) in a zone of the fibrous reinforcement (200) located in proximity to the separation (103) along the longitudinal direction (D_{L}), the yarns of the first yarn part of the plurality of warp yarn layers extending on one side of the separation (103) along the longitudinal direction, while the yarns of the second yarn part of the plurality of warp yarn layers extend on the other side of the separation (103) along the longitudinal direction.

12. The method according to claim 11, wherein the first yarn part (T₃, T₄ of the warp yarn layers (102) crosses a first time the second yarn part (T₅, T₆) of the warp yarn layers (102) in a zone of the fibrous reinforcement (200) located upstream of the separation (103) along the longitudinal direction (D_{L}) and in which the first yarn part of the warp yarn layers crosses a second time the second yarn part of the warp yarn layers in a zone of the fibrous reinforcement located downstream of the separation (103) along the longitudinal direction.
